# EUROPÄISCHE PATENTANMELDUNG

(11) **EP 2 322 400 A2**
(43) Veröffentlichungstag der Anmeldung: **18.05.2011**
(21) Anmeldenummer: 10014356.9
(22) Anmeldetag: 06.11.2010
(51) Int. Cl.: B60W 40/10, B60W 30/16

(54) **Verfahren zum Betrieb eines Stauassistenzsystems**

(30) Priorität: 11.11.2009 DE 102009052773
(71) Anmelder: Audi AG, 85045 Ingolstadt (DE)
(72) Erfinder: Hörwick, Markus, 80939 München (DE); Herbort, Steffen, 59269 Beckum (DE)
(74) Vertreter: Thielmann, Frank

(57) **Zusammenfassung**

Verfahren zum Betrieb eines Stauassistenzsystems eines Kraftfahrzeugs, bei dem die Erkennung einer Stauwahrscheinlichkeit unter Berücksichtigung der Daten eines Geschwindigkeitssensors des Kraftfahrzeugs vorgenommen wird, wobei im Rahmen der Stauerkennung zur Ermittlung der Stauwahrscheinlichkeit die mittlere Geschwindigkeit, die aus der Geschwindigkeit des Kraftfahrzeugs und wenigstens eines weiteren in der Umgebung des Kraftfahrzeugs befindlichen Fahrzeugs ermittelt wird, berücksichtigt wird.

## Beschreibung

Die Erfindung betrifft ein Verfahren zum Betrieb eines Stauassistenzsystems eines Kraftfahrzeugs, bei dem die Ermittlung einer Stauwahrscheinlichkeit unter Berücksichtigung der Daten eines Geschwindigkeitssensors des Kraftfahrzeugs vorgenommen wird.

Ein Stauassistenzsystem ist ein Fahrerassistenzsystem, das während eines Staus die vollständige Längs- und Querführung eines Kraftfahrzeugs übernimmt. Der Unterschied zu einem Abstandsregeltempomat, auch ACC genannt, besteht darin, dass das Stauassistenzsystem ein mehrmaliges Anhalten und wieder Anfahren des Kraftfahrzeugs bei grundsätzlich niedrigen Geschwindigkeiten ermöglichen soll und zusätzlich zur Längsführung auch die Querführung übernimmt.

Insbesondere die Querführung stellt dabei eine kritische Komponente dar, da in Querrichtung die Abstände zu anderen Fahrzeugen wesentlich geringer sind als in Längsrichtung. Für den Betrieb eines Stauassistenzsystems ist es daher von enormer Wichtigkeit, den Beginn und das Ende eines Staus zuverlässig festzustellen. Es besteht jedoch trotz allem ein gewisser Interpretationsspielraum allein beim Begriff dessen, was als Stau bezeichnet wird. Auch beruhen die Daten, die dem Betrieb des Stauassistenzsystems zugrunde gelegt werden, auf Sensordaten, die grundsätzlich mit mehr oder weniger großen Fehlern behaftet sind. Dementsprechend wird aus den vorliegenden Daten durch das Stauassistenzsystem lediglich eine Stauwahrscheinlichkeit berechnet. Unter einer Stauwahrscheinlichkeit wird bezogen auf Stauassistenzsysteme also die Wahrscheinlichkeit verstanden, dass sich das Kraftfahrzeug in einer Stausituation befindet.

Ganz grundlegend wird das Vorhandensein eines Staus erst dann für plausibel erachtet, wenn sich vor dem Kraftfahrzeug wenigstens ein weiteres Fahrzeug befindet. Unter einem Stau wird allgemein das Erliegen des Verkehrsflusses verstanden, wobei die Fahrzeuge entweder für längere Zeit zum Stillstand kommen oder sich mit einer vergleichsweise langsamen Geschwindigkeit fortbewegen. Darüber hinaus wird als Stau auch bezeichnet, wenn die Fahrzeuge trotz kurzfristiger Beschleunigungszeiten und höherer Geschwindigkeiten immer wieder auf niedrigste Fahrgeschwindigkeiten abgebremst werden müssen.

In all diesen Fällen muss das Stauassistenzsystem dazu ausgebildet sein, das Vorhandensein eines Staus mit einer genügend hohen Sicherheit feststellen zu können oder wenigstens das Nichtvorhandensein eines Staus zu erkennen.

Aus DE 10 2005 050 277 A1 ist ein gattungsgemäßes Verfahren zur Berechnung der Stauwahrscheinlichkeit bekannt, wozu die Fahrgeschwindigkeit des eigenen Kraftfahrzeugs herangezogen wird. Zur Ermittlung der Stauwahrscheinlichkeit werden eine obere und eine untere Grenzgeschwindigkeit festgelegt, wobei sich die Stauwahrscheinlichkeit durch zeitliche Integration von Differenzgeschwindigkeiten ergibt. Genauer gesagt wird der Integrand vergrößert, wenn die Kraftfahrzeuggeschwindigkeit unterhalb der oberen Grenzgeschwindigkeit und oberhalb der unteren Grenzgeschwindigkeit liegt. Dagegen wird der Integrand verkleinert, wenn die Kraftfahrzeuggeschwindigkeit oberhalb der oberen Grenzgeschwindigkeit liegt. Liegt die Kraftfahrzeuggeschwindigkeit dagegen unterhalb der unteren Grenzgeschwindigkeit, so bleibt der Integrand unverändert.

Die Differenzgeschwindigkeiten sind noch mit einem festzulegenden Faktor zu multiplizieren, um eine bestimmte Differenzgeschwindigkeit als Wahrscheinlichkeitswert verwenden zu können. Wahrscheinlichkeiten bewegen sich bekanntermaßen lediglich zwischen den Werten 0 und 1, weshalb die Differenzgeschwindigkeiten in jedem Fall auf Werte < 1 zu transformieren sind. Statt einer Transformation der Differenzgeschwindigkeiten kann auch der Zahlenwert, ab dem auf Stau erkannt wird, auf einen beliebigen Zahlenwert festgelegt werden. In diesem Fall wird der Begriff "Wahrscheinlichkeit" nicht mehr mathematisch korrekt verwendet, jedoch sind die Wirkung, die Differenzgeschwindigkeiten im Zahlenbereich zu transformieren oder stattdessen den Wahrscheinlichkeitswert der Stauwahrscheinlichkeit, mit dem das Vorhandensein eines Staus als gegeben angenommen wird, auf einen Wert oberhalb von 1 zu setzen in der Wirkung gleich.

Bei allen Ausgestaltungen muss sich die Stauwahrscheinlichkeit jedenfalls in einem vorgegebenen Intervall bewegen, sei es zwischen 0 und 1 oder zwischen 0 und einer anderen oberen Schranke. Daher wird eine Integration der Differenzgeschwindigkeiten, die aus dem vorgegebenen Wertbereich herausführt, nicht vorgenommen, vielmehr wird die Stauwahrscheinlichkeit dann auf einer oberen Grenzwahrscheinlichkeit oder einer unteren Grenzwahrscheinlichkeit eingefroren.

Mit dem beschriebenen Verfahren ist es möglich, Stausituationen zu erkennen.

Ein Verfahren zur Staudetektion durch Fahrzeug-zu-Fahrzeug-Kommunikation wird durch EP 1 895 485 A1 beschrieben. Darin wird vorgeschlagen, neben der aktuellen Geschwindigkeit eines Kraftfahrzeugs auch die relative Geschwindigkeit zu einem anderen Kraftfahrzeug zu betrachten. Aus dieser relativen Geschwindigkeit wird dann eine durchschnittliche relative Geschwindigkeit ermittelt, die mit einem Schwellwert verglichen wird. Dabei geht es hauptsächlich um die Verkehrsführung, beispielsweise Gegenmaßnahmen gegen Staus oder Stauinformationen für Verkehrsteilnehmer.

DE 10 2005 039 103 A1 betrifft ein Verfahren für die Erfassung eines Verkehrsraums. Dabei soll grundsätzlich aus Sensordaten aus Objekten der Verlauf von Fahrspuren abgeleitet werden. Es soll auch eine Durchschnittsgeschwindigkeit für jeden erkannten Fahrstreifen zur Verfügung gestellt werden. Die ermittelte Zusatzinformation soll beispielsweise für Spurwechsel oder Ausweichmanöver genutzt werden.

US 2005/0096838 A1 betrifft Verfahren und Systeme zur Erkennung der Fahrspur eines Kraftfahrzeugs und zur Vornahme eines Spurwechsels. Dabei soll immer dann, wenn die Fahrzeuggeschwindigkeit auf der aktuellen Fahrspur langsamer als auf anderen Fahrspuren ist, ein Spurwechsel durchgeführt werden. Eine Stauerkennung für Fahrspuren wird anhand der Durchschnittsgeschwindigkeit eines Kraftfahrzeugs durchgeführt.

Der Erfindung liegt damit die Aufgabe zugrunde, ein Verfahren anzugeben, das eine verbesserte Erkennung von Stausituationen ermöglicht.

Zur Lösung dieser Aufgabe ist ein Verfahren dieser Art vorgesehen, das im Rahmen der Stauerkennung zur Ermittlung der Stauwahrscheinlichkeit eine mittlere Geschwindigkeit, die aus der Geschwindigkeit des Kraftfahrzeugs und wenigstens eines weiteren in der Umgebung des Kraftfahrzeugs befindlichen Fahrzeugs ermittelt wird, berücksichtigt wird, wobei zur Ermittlung der Stauwahrscheinlichkeit die mittlere Geschwindigkeit zeitlich integriert wird, wobei die Differenzgeschwindigkeit der mittleren Geschwindigkeit, die unterhalb einer unteren Grenzgeschwindigkeit liegt, zu der unteren Grenzgeschwindigkeit den Integralwert erhöht, die Differenzgeschwindigkeit der mittleren Geschwindigkeit, die oberhalb einer oberen Grenzgeschwindigkeit liegt, zu der oberen Grenzgeschwindigkeit den Integralwert erniedrigt und eine mittlere Geschwindigkeit zwischen der oberen Grenzgeschwindigkeit und der unteren Grenzgeschwindigkeit den Integralwert unverändert lässt.

Bevorzugt werden die Geschwindigkeiten aller das Kraftfahrzeug umgebenden Fahrzeuge berücksichtigt, die durch Sensoren des Kraftfahrzeugs erfassbar sind. Hierbei können neben Radarsensoren auch Ultraschallsensoren und Bilddaten von Kameras berücksichtigt werden. Aus den Geschwindigkeiten der Fahrzeuge und des Kraftfahrzeugs wird grundsätzlich ein einfacher Mittelwert gebildet, um die mittlere Geschwindigkeit zu erhalten. Es ist aber auch möglich, bei der Berechnung der mittleren Geschwindigkeit die einzelnen Geschwindigkeiten gewichtet eingehen zu lassen und bei der Wichtung beispielsweise die Güte der Sensordaten zu berücksichtigen. Auf diese Art und Weise können die Daten von Sensoren berücksichtigt werden, die bei der Berechnung der Geschwindigkeiten Ergebnisse mit einer großen Streuung zurückliefern.

Durch die Verwendung der mittleren Geschwindigkeit zur Ermittlung der Stauwahrscheinlichkeit kann eine Fehlinterpretation der Verkehrslage dahingehend vermieden werden, dass sich das Kraftfahrzeug gar nicht in einer Stausituation befindet sondern aus anderen, nicht näher bekannten Gründen langsam bewegt, während die anderen Fahrzeuge höhere Geschwindigkeiten aufweisen. Denn eine Stausituation liegt nicht dann alleine vor, wenn das Kraftfahrzeug so gesteuert wird als ob eine Stausituation vorläge, vielmehr kommt es auch auf das Verhalten der umgebenden Fahrzeuge an. Durch das Zugrundelegen der mittleren Geschwindigkeit werden jedenfalls Informationen über die weiteren Verkehrsteilnehmer berücksichtigt, wodurch die Ermittlung der Stauwahrscheinlichkeit erheblich verbessert wird. Beispielsweise kann so eine Stausituation schneller erkannt werden, wenn das oder die vor dem Kraftfahrzeug befindlichen Fahrzeuge bereits stehen, das Kraftfahrzeug selbst aber noch mit einer geringen Geschwindigkeit rollt.

Zur Ermittlung der Stauwahrscheinlichkeit wird mit besonderem Vorteil die mittlere Geschwindigkeit zeitlich integriert, wobei die Differenzgeschwindigkeit der mittleren Geschwindigkeit, die unter einer unteren Grenzgeschwindigkeit liegt, zu der unteren Grenzgeschwindigkeit den Integralwert erhöht, die Differenzgeschwindigkeit der mittleren Geschwindigkeit, die oberhalb einer oberen Grenzgeschwindigkeit liegt, zu der oberen Grenzgeschwindigkeit den Integralwert erniedrigt und eine mittlere Geschwindigkeit zwischen der oberen Grenzgeschwindigkeit und der unteren Grenzgeschwindigkeit den Integralwert unverändert lässt. Bei dieser Ausgestaltung ergibt sich ein Unterschied zu bekannten Verfahren dahingehend, dass der Integralwert, der ein direktes Maß für die Stauwahrscheinlichkeit ist, bei mittleren Geschwindigkeiten, die unterhalb einer unteren Grenzgeschwindigkeit liegen, erhöht wird. Denn gerade dann, wenn alle Fahrzeuge stehen, liegt im Allgemeinen im Stau vor. Bewegen sich dagegen alle Fahrzeuge mit einer hohen Geschwindigkeit, wodurch die mittlere Geschwindigkeit ebenfalls hoch ist, so liegt die mittlere Geschwindigkeit über der oberen Grenzgeschwindigkeit und ein einmal bestehender Stau hat sich folglich aufgelöst. Somit führen hohe mittlere Geschwindigkeiten zu einer Verringerung des Integralwerts und damit zu einer Verringerung der Stauwahrscheinlichkeit. Mittlere Geschwindigkeiten zwischen der oberen Grenzgeschwindigkeit und der unteren Grenzgeschwindigkeit liefern dagegen keine verwertbare Information über das Vorhandensein oder Nichtvorhandensein eines Staus, weshalb in diesem Fall der Integralwert unverändert belassen wird.

Die Integration selbst kann auf mehrere Arten durchgeführt werden. Grundsätzlich beginnt die Integration bei Fahrtbeginn. Um der Tatsache Rechnung zu tragen, dass sich Staus auf mehrere Arten bilden können, und dass nicht jede langsame Fahrt mit einem Stau gleichzusetzen ist, soll bei der Integration eine bestimmte Fahrhistorie berücksichtigt werden, die allerdings nicht dazu führen darf, dass bei sich plötzlich verändernden Verkehrssituationen das Feststellen einer Stausituation oder das Auflösen eines Staus sozusagen verschlafen wird. Um dieses zu vermeiden, wird neben der als untere Grenze der Stauwahrscheinlichkeit in jedem Fall vorhandenen unteren Grenzwahrscheinlichkeit von 0 eine obere Grenzwahrscheinlichkeit als Maximalwert der Stauwahrscheinlichkeit festgelegt. Das Festlegen eines Maximalwerts ist deshalb sinnvoll, da bei der vorgegebenen Ermittlung der Stauwahrscheinlichkeit durch Aufintegration von Differenzgeschwindigkeiten kein Maximalwert erreicht wird und ein Grenzwert, ab dem auf das Vorhandensein eines Staus erkannt wird, beliebig überschritten wird. Ohne das Setzen eines Maximalwerts hätte das zur Folge, dass das Auflösen eines Staus, der sich beispielsweise über mehrere Stunden erstreckt hat, ebenfalls erst nach mehreren Stunden oder wenigstens einer Zeit im Bereich mehrerer Minuten erkannt würde. Als Maximalwert kann dabei die obere Grenzwahrscheinlichkeit verwendet werden.

Alternativ werden lediglich die mittleren Geschwindigkeiten aus einem vorgegebenen Zeitbereich berücksichtigt, beispielsweise die mittleren Geschwindigkeiten der letzten drei Minuten. Auch in diesem Fall kann der Integralwert einen Maximalwert nicht überschreiten, da die unterste mittlere Geschwindigkeit bei 0 liegt und dementsprechend die Differenzgeschwindigkeit zur unteren Grenzgeschwindigkeit ebenfalls den vorgegebenen Wert nicht überschreitet. Über diese maximale Differenzgeschwindigkeit und die zu berücksichtigende Zeitdauer ist somit der Maximalwert des Integrals vorgegeben. Dieses Vorgehen hat allerdings den Nachteil, dass die Daten über die mittleren Geschwindigkeiten des angegebenen Zeitraums zu bevorraten sind. In beiden Varianten ist als untere Grenzwahrscheinlichkeit aber der Wert von 0 sinvoll.

Vorzugsweise können die mittlere Geschwindigkeit und die Stauwahrscheinlichkeit für jede Fahrspur der vom Kraftfahrzeug befahrenen Straße separat ermittelt werden. Diese einzelnen Stauwahrscheinlichkeiten bieten die Möglichkeit, differenziertere Aussagen über das Vorhandensein eines Staus zuzulassen. Die Betrachtung der einzelnen Fahrspuren ist insbesondere aufgrund der Querführung des Kraftfahrzeugs mittels des Stauassistenzsystems sinnvoll. Denn es ist beispielsweise denkbar, dass auf der eigenen Fahrspur der Verkehrsfluss bereits ins Stocken geraten ist oder die Fahrzeuge bereits stehen, auf der daneben liegenden Spur die Fahrzeuge allerdings noch eine beträchtliche Geschwindigkeit aufweisen. In diesem Fall sollte die Querführung des Kraftfahrzeugs beim Fahrer verbleiben, da in Querrichtung nur ein geringer Abstand zu benachbarten Fahrzeugen überhaupt erreichbar ist und dementsprechend eine Kollisionsgefahr mit den Fahrzeugen auf den benachbarten Fahrspuren besteht, falls das Stauassistenzsystem bei der Querführung fehlerhaft arbeitet.

Dementsprechend kann in einer ersten Ausgestaltung vorgesehen sein, dass ein Stau erkannt wird, wenn auf allen Fahrspuren die Stauwahrscheinlichkeit eine obere Grenzwahrscheinlichkeit erreicht oder überschreitet. Alternativ kann auch vorgesehen sein, dass ein Stau erkannt wird, wenn auf allen zum Kraftfahrzeug benachbarten Fahrspuren die Stauwahrscheinlichkeit eine obere Grenzwahrscheinlichkeit erreicht oder überschreitet. In einer weiteren Alternative kann ein Stau erkannt werden, wenn auf der Fahrspur des Kraftfahrzeugs die Stauwahrscheinlichkeit eine obere Grenzwahrscheinlichkeit erreicht oder überschreitet.

Diese Alternativen erlauben ein an verschiedene Situationen angepasstes Verhalten. Neben der festen Auswahl einer der drei Alternativen kann auch jeweils unter Berücksichtigung von Randbedingungen jeweils die passendste Alternative ausgewählt werden.

Im ersten Fall wird ein Stau nur als existent betrachtet, wenn auf allen Fahrspuren die aus der jeweiligen mittleren Geschwindigkeit ermittelte Stauwahrscheinlichkeit eine obere Grenzwahrscheinlichkeit erreicht oder überschreitet. In diesem Fall ist der Verkehrsfluss vollständig zum Erliegen gekommen und es ist nicht damit zu rechnen, dass sich der Stau schnell wieder auflösen wird. Es handelt sich dementsprechend auch nicht um eine bloß kurzfristige Stockung auf der eigenen Fahrspur, vielmehr ist in diesem Fall mit einer längerfristigen Störung des Verkehrsflusses zu rechnen. Selbstverständlich wird dabei wie auch in allen anderen Ausgestaltungen lediglich von einer Betrachtung der Fahrspuren ausgegangen, die in die gleiche Richtung führen wie die vom Kraftfahrzeug befahrene Fahrspur. Die Fahrspuren auf der Gegenseite sind im Hinblick auf eine Ermittlung einer Stauwahrscheinlichkeit für das Kraftfahrzeug irrelevant.

Diese Ausgestaltung ist beispielsweise dann unbefriedigend, wenn sich das Kraftfahrzeug beispielsweise auf einer vier- oder mehrspurigen Autobahn befindet, die geteilt wird und der Stau lediglich im vom Kraftfahrzeug befahrenen Abschnitt auftritt, nicht aber an der Abzweigung. Auf diesen Fahrspuren befinden sich dementsprechend noch Fahrzeuge mit höheren Fahrgeschwindigkeiten, weshalb das Stauassistenzsystem die Steuerung des Kraftfahrzeugs nicht übernehmen würde. Um die Querführung des Kraftfahrzeugs zulassen zu können ist es aber ausreichend, wenn auf den Fahrspuren, die zum Kraftfahrzeug benachbart sind, ein Stau vorliegt und dementsprechend die Stauwahrscheinlichkeit eine obere Grenzwahrscheinlichkeit erreicht oder überschritten hat. Fahrspuren, die nicht zum Kraftfahrzeug benachbart sind, sind hinsichtlich der Querführung des Kraftfahrzeugs irrelevant und daher im Rahmen der Steuerung des Kraftfahrzeugs mittels des Stauassistenzsystems unerheblich.

Wenn die Eigengeschwindigkeit des Kraftfahrzeugs klein genug ist, ist es aber auch möglich, dass ein Stau erkannt wird, wenn nur auf der Fahrspur des Kraftfahrzeugs die obere Grenzwahrscheinlichkeit erreicht oder überschritten wurde. Auf den benachbarten Fahrspuren kann dann ein reger Verkehrsfluss vorliegen oder auch nicht.

Mit Vorteil kann vorgesehen sein, dass bei Ausfall eines Sensors, dessen Daten bei der Ermittlung der Stauwahrscheinlichkeit berücksichtigt werden, die Stauwahrscheinlichkeit schrittweise oder kontinuierlich verringert wird. Das Auflösen eines Staus erkennt ein Stauassistenzsystem daran, dass die Stauwahrscheinlichkeit eine untere Grenzwahrscheinlichkeit erreicht oder unterschreitet. In diesem Fall wird der Fahrer aufgefordert, die Führung des Kraftfahrzeugs, zumindest die Querführung, wieder zu übernehmen. Weiterhin ist zu beachten, dass als eine Grundannahme für das Vorhandensein eines Staus gilt, dass sich das Kraftfahrzeug hinter anderen Fahrzeugen herbewegt, dementsprechend also wenigstens ein weiteres Kraftfahrzeug über ein Sensorsignal detektiert werden kann. Fällt dieser Sensor aus, so wird das Ausbleiben des Signals mit einem Auflösen des Staus gleichgesetzt, weshalb der Fahrer zum Tätigwerden aufgefordert wird. Es kommt allerdings immer wieder vor, dass Sensoren für einen kurzen Zeitraum, insbesondere im Bereich von 1 - 2 Sekunden, keine oder nur fehlerhafte Daten liefern. Derartige Datenausfälle können beispielsweise häufiger auftreten, wenn der Sensor verschmutzt ist. In diesem Fall ist es nicht praktikabel, den Fahrer nach jedem Sensorausfall zur Übernahme der Führung des Kraftfahrzeugs aufzufordern. Andererseits kann bei Ausfall eines Sensors auch nicht davon ausgegangen werden, dass das Stauassistenzsystem eine korrekte Führung des Kraftfahrzeugs gewährleisten kann. Die schrittweise oder kontinuierliche Verringerung der Stauwahrscheinlichkeit führt also dazu, dass der Fahrer erst nach einem länger anhaltenden Sensorausfall die Führung des Kraftfahrzeugs wieder übernehmen muss. Diese Verzögerungszeit bis zur Ansprache des Fahrers hängt zum einen davon ab, wie hoch die Stauwahrscheinlichkeit vor Eintritt des Sensorausfalls war. Lag die Stauwahrscheinlichkeit bereits dicht über der unteren Grenzwahrscheinlichkeit, so fällt sie bei Ausfall eines Sensors sehr schnell unter die untere Grenzwahrscheinlichkeit, weshalb der Fahrer dann zum Führen des Kraftfahrzeugs aufgefordert wird. Lag die Stauwahrscheinlichkeit vor Ausfall des Sensors dagegen beim Maximalwert, so steht eine längere Zeit bis zum Unterschreiten der unteren Grenzwahrscheinlichkeit zur Verfügung.

Unabhängig von der Stauwahrscheinlichkeit, die bei Ausfall des Sensors vorlag, gibt es weitere Umstände, die ein schnelleres Eingreifen des Fahrers erforderlich machen können. Vorzugsweise kann daher die Verringerung der Stauwahrscheinlichkeit unter Berücksichtigung der mittleren Geschwindigkeit vorgenommen werden. Weiterhin kann die Verringerung der Stauwahrscheinlichkeit unter Berücksichtigung des Abstands des Kraftfahrzeugs zu einem voranfahrenden Fahrzeug vorgenommen werden. Bei Ausfall eines Sensors, der ein vorausfahrendes Fahrzeug detektiert, besteht die Gefahr eines Auffahrunfalls, wenn eine Annäherung der beiden Fahrzeuge nicht rechtzeitig erkannt wird. Denn der Sensor liefert keine aktuellen Informationen und der Fahrer braucht auch eine gewisse Reaktionszeit, um nach einer Aufforderung zur Übernahme der Führung des Fahrzeugs diese tatsächlich vornehmen zu können. Die Gefahr, dass ein derartiger Auffahrunfall tatsächlich vorkommt, hängt natürlich von der Geschwindigkeit des Kraftfahrzeugs, der mittleren Geschwindigkeit auf der eigenen Fahrspur und dem Abstand des Kraftfahrzeugs zu einem vorausfahrenden Fahrzeug, der vor dem Sensorausfall festgestellt wurde, ab. Unter Berücksichtigung dieser Größen kann somit die Gefahr eines Auffahrunfalls beachtet werden, ohne dass der Fahrer bei jedem Sensorausfall zur Übernahme der Führung des Kraftfahrzeugs aufgefordert werden muss.

Daneben betrifft die Erfindung auch ein Kraftfahrzeug mit einem Stauassistenzsystem, umfassend wenigstens einen Sensor und eine Steuerungseinrichtung, welche zur Durchführung des erfindungsgemäßen Verfahrens ausgebildet ist. Sämtliche Ausführungen bezüglich des Verfahrens lassen sich analog auf das Kraftfahrzeug übertragen.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig.1: ein Kraftfahrzeug auf einer mehrspurigen Straße,
- Fig.2: ein Zeitdiagramm dreier Kurven,
- Fig.3: drei Staukurven,
- Fig.4: Stauzustände für mehrere Fahrspuren, und
- Fig.5: ein Zeitdiagramm dreier Kurven in einer zweiten Ausgestaltung.

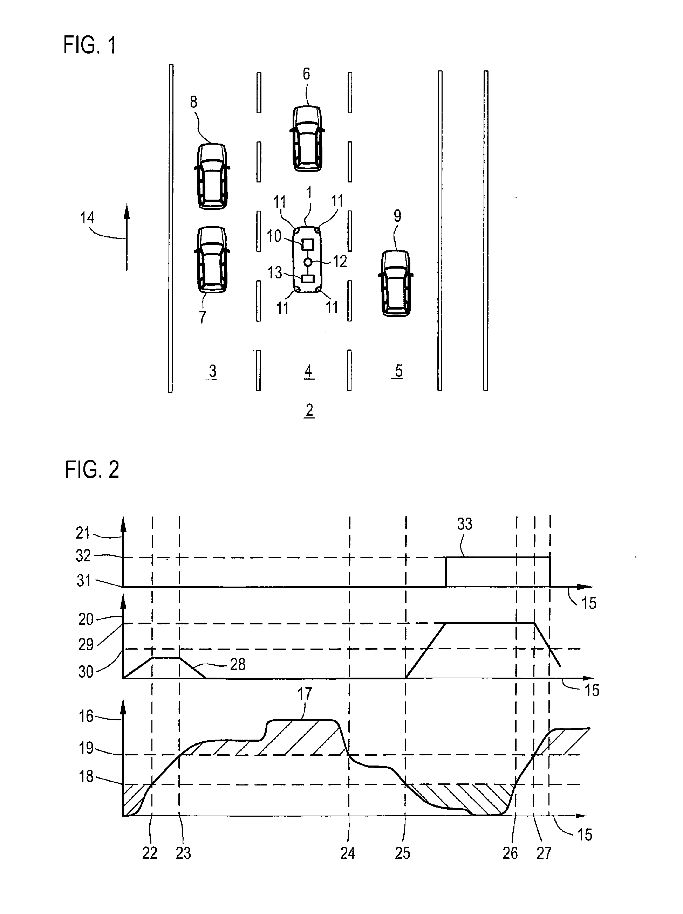

Fig. 1 zeigt ein Kraftfahrzeug 1 auf einer Straße 2 mit drei Fahrspuren 3, 4 und 5. Bei der Straße 2 handelt es sich um eine Autobahn, das erfindungsgemäße Verfahren lässt sich aber auch auf Schnellstraßen und sonstigen Straßentypen anwenden.

Um das Kraftfahrzeug 1 herum befinden sich die Fahrzeuge 6, 7, 8 und 9. Zur Detektion dieser Fahrzeuge 6, 7, 8 und 9 besitzt das Kraftfahrzeug 1 Sensoren. Rein exemplarisch sind Radarsensoren 11 und eine Kamera 12 dargestellt. Zur Erfassung der eigenen Geschwindigkeit hat das Kraftfahrzeug 1 einen Geschwindigkeitssensor 13, mit den Radarsensoren 11 und der Kamera 12 können auch die Geschwindigkeiten der Fahrzeuge 6, 7, 8 und 9 und gegebenenfalls weitere, hier nicht gezeigter Fahrzeuge in der Umgebung ermittelt werden, indem die Sensorsignale entsprechend durch eine im Kraftfahrzeug 1 vorhandene Steuerungseinrichtung ausgewertet werden. Die Fahrtrichtung ist in Richtung des Pfeils 14.

Zur Ermittlung einer Stauwahrscheinlichkeit werden die Geschwindigkeiten des Kraftfahrzeugs 1 sowie der Fahrzeuge 6, 7, 8 und 9 zu einer mittleren Geschwindigkeit zusammengefasst. Die Stauwahrscheinlichkeit liefert eine Aussage darüber, ob sich das Kraftfahrzeug 1 in einer Stausituation befindet bzw. wie hoch die Wahrscheinlichkeit dafür ist, dass sich das Kraftfahrzeug 1 momentan in einer Stausituation befindet. In Abhängigkeit dieser Information wird ein Stauassistenzsystem 10 betrieben. Die mittlere Geschwindigkeit des Kraftfahrzeugs 1 sowie der Fahrzeuge 6, 7, 8 und 9 soll also eine Entscheidung darüber ermöglichen, ob sich das Kraftfahrzeug 1 in einem Stau befindet und dementsprechend das Stauassistenzsystem 10 eingeschaltet wird oder ob sich ein vorhandener Stau aufgelöst hat und das Stauassistenzsystem 10 dementsprechend abgeschaltet werden muss. Hierbei ist eine treffsichere Entscheidung nötig, da das Stauassistenzsystem 10 nicht nur zur Längsführung des Kraftfahrzeugs 1, sondern auch zu seiner Querführung ausgebildet ist. Eine Querführung außerhalb einer Stausituation ist aber kritisch, da der seitliche Abstand des Kraftfahrzeugs 1 zu den Fahrzeugen 7 und 9 wesentlich geringer und auch nicht vergrößerbar ist im Vergleich zum Längsabstand zum vorausfahrenden Kraftfahrzeug 6. Dementsprechend müssen die Sensordaten eine zuverlässige Aussage darüber ermöglichen, ob sich das Kraftfahrzeug 1 in einem Stau befindet.

Das Stauassistenzsystem 10 weist dementsprechend eine Steuerungseinrichtung auf, die dazu ausgebildet ist, aus den Geschwindigkeiten der Fahrzeuge 6, 7, 8, und 9 und der Geschwindigkeit des Kraftfahrzeugs 1 eine mittlere Geschwindigkeit zu ermitteln und aus dem zeitlichen Verlauf der mittleren Geschwindigkeit ein binäres Signal darüber zu errechnen, ob eine Stausituation vorliegt oder nicht.

Fig. 2 zeigt ein Zeitdiagramm, aus dem hervorgeht, wie aus dem zeitlichen Verlauf der mittleren Geschwindigkeit das binäre Stausignal ermittelt wird. Binär heißt dabei, dass das Stausignal lediglich zwei Werte annehmen kann, von denen eine für das Vorhandensein einer Stausituation steht und der andere für das Nichtvorhandensein einer Stausituation.

Auf der x-Achse 15 ist dabei jeweils die Zeit aufgetragen, während auf der y-Achse 16 die mittlere Geschwindigkeit, auf der y-Achse 20 die Stauwahrscheinlichkeit und auf der y-Achse 21 das Stausignal dargestellt ist. Der Zeitverlauf der mittleren Geschwindigkeit wird durch die Kurve 17 wiedergegeben. Die Kurve 17 wird dabei durch die untere Grenzgeschwindigkeit 18 und die obere Grenzgeschwindigkeit 19 in drei Geschwindigkeitsbereiche eingeteilt. Die Schnittpunkte der Kurve 17 mit der unteren Grenzgeschwindigkeit 18 bzw. der oberen Grenzgeschwindigkeit 19 liegen bei den Zeitpunkten 22, 23, 24, 25, 26 und 27. Mittlere Geschwindigkeiten unterhalb der unteren Grenzgeschwindigkeit 18 stehen dabei für ein langsames Fahren und erhöhen dementsprechend die Stauwahrscheinlichkeit, während Geschwindigkeiten oberhalb der oberen Grenzgeschwindigkeit 19 gegen das Vorhandensein eines Staus sprechen und dementsprechend die Stauwahrscheinlichkeit verringern. Geschwindigkeiten zwischen der unteren Grenzgeschwindigkeit 18 und der oberen Grenzgeschwindigkeit 19 sind bezüglich des Vorhandenseins eines Staus indifferent und werden somit nicht berücksichtigt.

Die sich aus der mittleren Geschwindigkeit anhand der Kurve 17 ergebende Stauwahrscheinlichkeit ist durch die Kurve 28 dargestellt. Vom Zeitpunkt 0 bis zum Zeitpunkt 22 liegt die mittlere Geschwindigkeit unterhalb der unteren Grenzgeschwindigkeit 18, weshalb die Kurve 28 in diesem Abschnitt ansteigt. Zwischen den Zeitpunkten 22 und 23 ist die mittlere Geschwindigkeit zwischen der unteren Grenzgeschwindigkeit 18 und der oberen Grenzgeschwindigkeit 19, weshalb die Kurve 28 in diesem Zeitbereich unverändert bleibt. Danach steigt die mittlere Geschwindigkeit über die obere Grenzgeschwindigkeit 19 und dementsprechend sinkt die Kurve 28 auf 0. Die Stauwahrscheinlichkeit hat dabei einen Minimal- und einen Maximalwert. Der Minimalwert liegt bei 0. Dieser Wert kann auch nicht dadurch unterschritten werden, dass die mittlere Geschwindigkeit über einen langen Zeitraum oberhalb der oberen Grenzgeschwindigkeit 19 ist. Analog gibt es auch einen Maximalwert, der auch bei langfristigem Stillstand des Kraftfahrzeugs als nicht überschreitbarer Wert festgesetzt wird. Der Maximalwert kann entweder bei 1 liegen oder auch darüber. Dies hängt davon ab, wie die mittlere Geschwindigkeit bzw. die Differenz der mittleren Geschwindigkeit von der oberen Grenzgeschwindigkeit 19 bzw. von der unteren Grenzgeschwindigkeit 18 in die Stauwahrscheinlichkeit umgerechnet wird. Eine Wahrscheinlichkeit im mathematischen Sinne liegt nur in einem Bereich zwischen 0 und 1, wobei 0 für ein unmögliches Ereignis und 1 für ein sicheres Ereignis steht. Alle Werte dazwischen geben eine Wahrscheinlichkeit für das Eintreten oder Vorhandensein eines Ereignisses an.

Die Differenzgeschwindigkeit der mittleren Geschwindigkeit zu der unteren Grenzgeschwindigkeit 18 oder der oberen Grenzgeschwindigkeit 19 liegt aber praktisch immer mindestens im Bereich mehrerer Stundenkilometer. Bei der Integration über einen längeren Zeitraum liegen die Zahlenwerte dementsprechend oberhalb der Zahl 1. Sie müssen dementsprechend entweder in den Zahlenbereich zwischen 0 und 1 transformiert werden, beispielsweise indem die Differenzgeschwindigkeit durch einen entsprechend großen Zahlenwert dividiert wird. Alternativ kann auch der Maximalwert auf einen Zahlenwert oberhalb von 1 gesetzt werden, was im mathematischen Sinne nicht korrekt ist. Allerdings kann auf diese Art und Weise eine ständige Division der mittleren Geschwindigkeit unterbleiben und an der Aussagekraft des Integralwertes darüber, ob ein Stau vorliegt oder nicht, wird dadurch nichts geändert. Dementsprechend wird in der vorliegenden Anmeldung unabhängig vom Festlegen des Maximalwerts auf 1 oder einen Wert darüber von der Stauwahrscheinlichkeit gesprochen.

Solange die mittlere Geschwindigkeit unterhalb der unteren Grenzgeschwindigkeit 18 liegt wächst die Stauwahrscheinlichkeit an. Bei Erreichen der oberen Grenzwahrscheinlichkeit 29 wird das binäre Stausignal auf den Wert "Stau" 32 gesetzt, während vorher der Wert "kein Stau" 31 vorlag. Zur Repräsentation der Werte "Stau" 32 und "kein Stau" 31 werden normalerweise die Zahlenwerte 1 und 0 herangezogen. Der zeitliche Verlauf des Stausignals ergibt sich dementsprechend aus der Kurve 33. Wenn die Stauwahrscheinlichkeit die untere Grenzwahrscheinlichkeit 30 wieder unterschreitet, wird das Stausignal wieder auf den Wert "kein Stau" 31 gesetzt. In diesem Fall übermittelt das Stauassistenzsystem 10 eine Information an den Fahrer, die ihn zur Übernahme der Querlenkung des Kraftfahrzeugs auffordert. Diese Information kann akustisch, optisch oder haptisch übermittelt werden. Das Stauassistenzsystem wird also solange betrieben, wie das Stausignal auf dem Wert "Stau" 32 liegt.

Das Abstellen bzw. zugrunde legen der mittleren Geschwindigkeit bietet dabei den Vorteil, dass die Gesamtsituation zur Feststellung verwendet wird, ob eine Stausituation vorliegt oder nicht und nicht lediglich Parameter über das Kraftfahrzeug 1 zugrunde gelegt werden. Dadurch wird vermieden, dass beispielsweise bei langsamer Fahrt auf der rechten Spur einer Autobahn das Stausignal irrigerweise auf "Stau" 32 gesetzt wird, obwohl die Fahrzeuge um das Kraftfahrzeug 1 herum mit viel höheren Geschwindigkeiten unterwegs sind. Die Verminderung der mittleren Geschwindigkeit ist dabei unabhängig von der Art der Auswertung, beispielsweise auch davon, ob die mittlere Geschwindigkeit im Zeitverlauf integriert wird, wie integriert wird, oder ob die Daten auf andere Art und Weise ausgewertet werden.

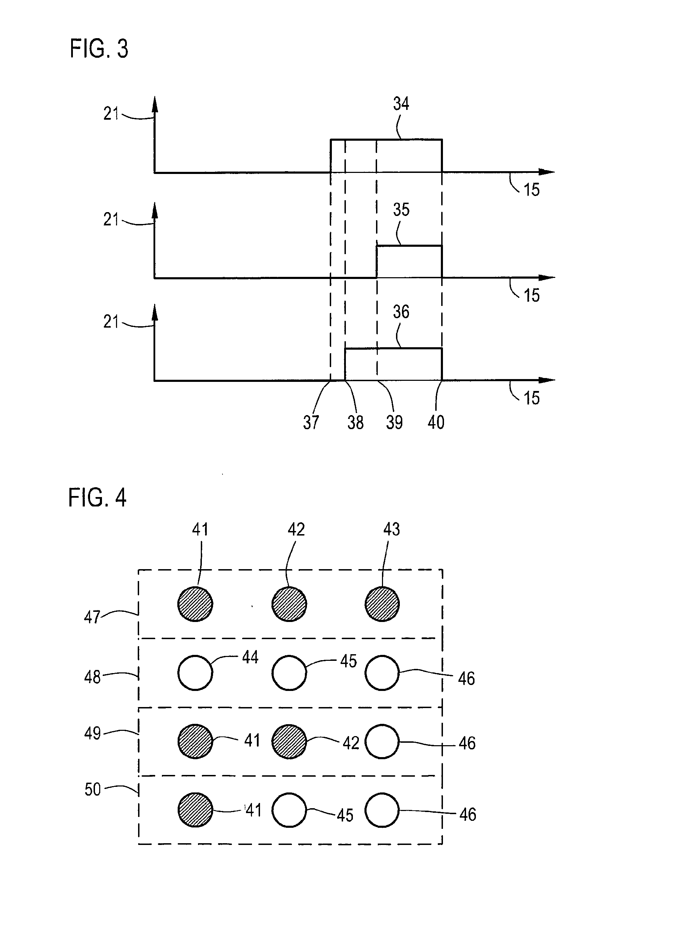

In einer weiteren Ausgestaltung, vgl. Fig. 3, ist es auch möglich, das Stausignal für jede einzelne vorhandene Fahrspur 3, 4 und 5 getrennt festzulegen. Die Kurven 34, 35 und 36 zeigen dabei jeweils das Stausignal, das für die Fahrspuren 3, 4 und 5 ermittelt wurde. Die Kurve 34 ergibt sich dementsprechend aus der mittleren Geschwindigkeit der Fahrzeuge 7 und 8, die Kurve 35 aus der mittleren Geschwindigkeit des Kraftfahrzeugs 1 und des Fahrzeugs 6 und die Kurve 36 aus der Geschwindigkeit des Fahrzeugs 5.

Fig. 3 zeigt, dass das Stausignal für die jeweiligen Fahrspuren zu unterschiedlichen Zeitpunkten auf "Stau" 32 und "kein Stau" 31 steht. Zum Zeitpunkt 37 ist lediglich für Spur 3 das Stausignal auf "Stau" 32, zum Zeitpunkt 38 aber für die Spuren 3 und 5. Zum Zeitpunkt 39 ist das Stausignal auf allen Fahrspuren 3, 4 und 5 auf "Stau" 32, während es zum Zeitpunkt 40 für alle Spuren auf "kein Stau" 31 fällt.

Eine dementsprechende Staulogik zeigt Fig. 4. Dabei werden verschiedene Situationen 47, 48, 49 und 50 unterschieden. In der Situation 47 ist der Zeitabschnitt zwischen den Zeitpunkten 39 und 40 dargestellt, dementsprechend stehen die dargestellten Symbole für einen Stau auf der jeweiligen Fahrspur. Das Symbol 41 repräsentiert einen Stau auf Fahrspur 3, das Symbol 42 einen Stau auf Fahrspur 4 und das Symbol 43 einen Stau auf Fahrspur 5. Diese Formulierung ist gleichbedeutend damit, dass für jede Fahrspur das Stausignal den Wert "Stau" 32 hat. Die dazu entgegengesetzte Situation ergibt sich in Situation 48. Das Symbol 44 zeigt "kein Stau" auf Fahrspur 3, das Symbol 45 "kein Stau" auf Fahrspur 4 und das Symbol 46 "kein Stau" auf Fahrspur 5. In den Situationen 47 und 48 ist die Interpretation klar, in Situation 47 liegt ein Stau vor und das Stauassistenzsystem wird dementsprechend betrieben. Entgegengesetzt hierzu wird das Stauassistenzsystem 10 in Situation 48 nicht betrieben. Entscheidungsspielräume bestehen aber in den Situationen 49 und 50, in denen nicht auf allen Fahrspuren ein Stau erkannt wird und dementsprechend das Stausignal nicht auf "Stau" 32 steht. In Situation 49 wird lediglich auf den Fahrspuren 3 und 4 auf Stau erkannt, während in Situation 50 sogar nur für Fahrspur 3 ein Stau ermittelt wurde. Die Entscheidungslogik kann hier unterschiedlich ausgestaltet sein. Zum einen kann vorgesehen sein, dass das Stauassistenzsystem nur betrieben wird, wenn wie in Situation 47 auf allen Fahrspuren ein Stau erkannt wird. Dies ist selbstverständlich unabhängig von der Zahl der vorhandenen Fahrspuren.

Alternativ kann auch vorgesehen sein, dass das Stauassistenzsystem betrieben wird, wenn auf der kraftfahrzeugeigenen Fahrspur sowie auf allen angrenzenden Fahrspuren das Stausignal auf "Stau" 32 steht. In Situation 49 wird das Stauassistenzsystem 10 also dann aktiviert, wenn sich das Kraftfahrzeug 1 auf Fahrspur 3 befindet und auch auf der einzigen angrenzenden Fahrspur 4 ein Stau ermittelt wurde. In Situation 50 wird das Stauassistenzsystem 10 dagegen nur aktiviert, wenn es für ausreichend erachtet wird, dass auf der kraftfahrzeugeigenen Fahrspur das Stausignal auf "Stau" 32 steht.

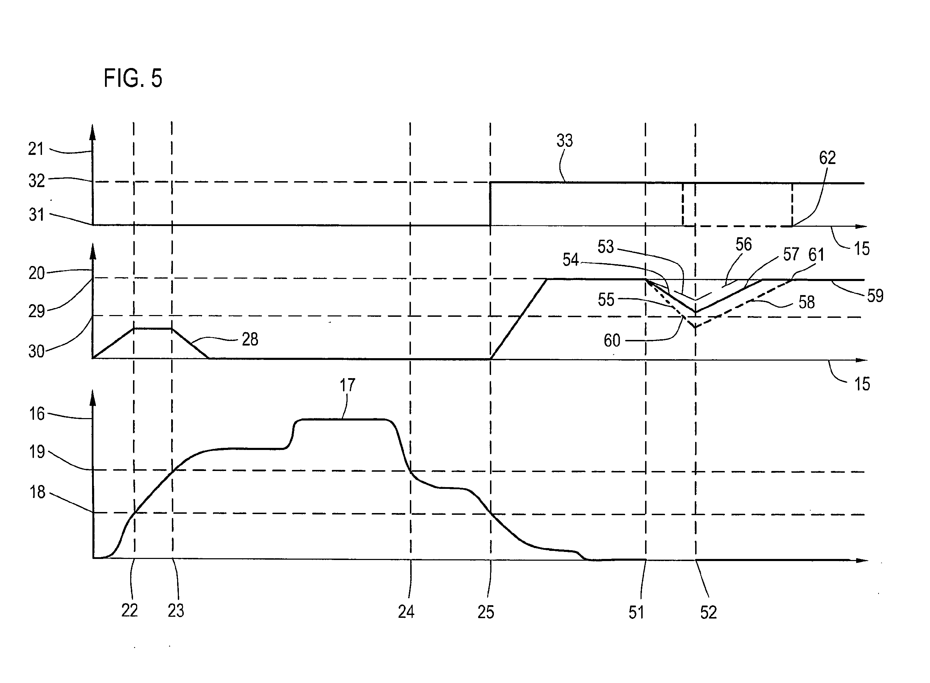

Fig. 5 zeigt ein zu Fig. 2 ähnliches Zeitdiagramm der Kurve 17, wobei zwischen dem Zeitpunkt 51 und dem Zeitpunkt 52 aufgrund eines Sensorausfalls keine mittlere Geschwindigkeit ermittelbar ist. Dieser Fall kann eintreten, wenn die mittlere Geschwindigkeit aus der Geschwindigkeit des Kraftfahrzeugs 1 und allen umgebenden Fahrzeugen 6, 7, 8 und 9 ermittelt wird wie auch für den Fall, dass das binäre Stausignal aus den mittleren Geschwindigkeiten für jede Fahrspur einzeln zu ermitteln ist. Nachdem eine mittlere Geschwindigkeit jedenfalls nicht mehr ermittelbar ist wird der Integrationswert und damit die Stauwahrscheinlichkeit herabgesetzt, wie in den Kurvenabschnitten 53, 54 und 55 der Kurve 28 dargestellt ist. Durch die Steigung der Kurvenabschnitte 53, 54 und 55 wird dementsprechend eine unterschiedliche Zeitspanne vorgegeben, die verstreichen darf, bis die Kurve 28 unter die untere Grenzwahrscheinlichkeit 30 fällt und dementsprechend der Fahrer eine Übernahmeaufforderung erhält. Die Steigung wird in Abhängigkeit der Geschwindigkeit des Kraftfahrzeugs 1 und des zuletzt detektierten Abstands zum vorausfahrenden Fahrzeug 6 bestimmt. Insbesondere bei einer Geschwindigkeit von 0 des Kraftfahrzeugs 1 kann eine extrem niedrige Steigung gewählt werden, um keine unnötige Übernahmeaufforderung an den Fahrer abzugeben. Denn es ist durchaus üblich, dass Sensoren kurzfristig keinerlei Signale liefern. Durch die beschriebene Ausgestaltung kann es vermieden werden, dass der Fahrer bei jedem Sensorausfall sofort dazu aufgefordert wird, die Querführung des Kraftfahrzeugs 1 wieder zu übernehmen. Dadurch kann der Komfort verbessert werden und die Akzeptanz des Stauassistenzsystems beim Fahrer erhöht werden.

Nachdem der Ausfall des Sensors beendet ist wird die Integration der mittleren Geschwindigkeit wieder in Abhängigkeit der Sensordaten vogenommen. Da unabhängig von der zugrunde gelegten Steigung zwischen den Zeitpunkten 51 und 52 die Differenzgeschwindigkeit zwischen der Geschwindigkeit des Kraftfahrzeugs 1 und der unteren Grenzgeschwindigkeit 18 nach dem Zeitpunkt 52 festliegt, ist dadurch auch die Steigung der Kurve 28 vorgegeben. Dementsprechend sind die Kurvenabschnitte 56, 57 und 58 parallel und erreichen die obere Grenzwahrscheinlichkeit 29 zu verschiedenen Zeitpunkten. Beim Kurvenabschnitt 59 ist in allen Fällen die obere Grenzwahrscheinlichkeit 29 wieder erreicht und dementsprechend liegt ein Stau vor. Je nach Ausgestaltung der Kurve nach dem Zeitpunkt 51 ergibt sich allerdings ein unterschiedlicher Betrieb des Stauassistenzsystems 10. Wird die Steigung der Kurve 28 wie in Kurvenabschnitt 55 gezeigt gewählt, so unterschreitet die Kurve 28 zum Zeitpunkt 60 die untere Grenzwahrscheinlichkeit 30. Dementsprechend fällt das Stausignal auf "kein Stau" 31, weshalb der Fahrer zum Querführen des Kraftfahrzeugs 1 aufgefordert wird. Zum Zeitpunkt 61 erreicht der Kurvenabschnitt 58 wieder die obere Grenzwahrscheinlichkeit 29, weshalb hier das Stauassistenzsystem 10 wieder aktiviert wird. Liegt die Steigung aber wie in den Kurvenabschnitten 53 und 54 gezeigt vor, so erreicht die Kurve 28 wie in den Kurvenabschnitten 56 und 57 gezeigt die obere Grenzwahrscheinlichkeit 29 wieder, ohne die untere Grenzwahrscheinlichkeit 30 unterschritten zu haben. Daher bleibt bei diesem Verhalten der Kurve 28 das Stausignal durchgehend auf "Stau" 32. Je nach Wahl der Steigung der Stauwahrscheinlichkeit nach dem Zeitpunkt 51 ergibt sich ein unterschiedliches Verhalten des Stausignals. Dieses kann durchgehend auf "Stau" 32 stehen, wie Kurve 33 zeigt. Es kann aber auch wie durch Kurvenabschnitt 62 vorgegeben über einen bestimmten zeitlichen Bereich der Betrieb des Stausassistenzsystems 10 unterbrochen werden.

## Patentansprüche

1. Verfahren zum Betrieb eines Stauassistenzsystems eines Kraftfahrzeugs, bei dem die Ermittlung einer Stauwahrscheinlichkeit unter Berücksichtigung der Daten eines Geschwindigkeitssensors des Kraftfahrzeugs vorgenommen wird,
**dadurch gekennzeichnet,**
**dass** im Rahmen der Stauerkennung zur Ermittlung der Stauwahrscheinlichkeit eine mittlere Geschwindigkeit, die aus der Geschwindigkeit des Kraftfahrzeugs und wenigstens eines weiteren in der Umgebung des Kraftfahrzeugs befindlichen Fahrzeugs ermittelt wird, berücksichtigt wird, wobei zur Ermittlung der Stauwahrscheinlichkeit die mittlere Geschwindigkeit zeitlich integriert wird, wobei die Differenzgeschwindigkeit der mittleren Geschwindigkeit, die unterhalb einer unteren Grenzgeschwindigkeit liegt, zu der unteren Grenzgeschwindigkeit den Integralwert erhöht, die Differenzgeschwindigkeit der mittleren Geschwindigkeit, die oberhalb einer oberen Grenzgeschwindigkeit liegt, zu der oberen Grenzgeschwindigkeit den Integralwert erniedrigt und eine mittlere Geschwindigkeit zwischen der oberen Grenzgeschwindigkeit und der unteren Grenzgeschwindigkeit den Integralwert unverändert lässt.

2. Verfahren nach Anspruch 1,
**dadurch gekennzeichnet,**
**dass** eine mittlere Geschwindigkeit und eine Stauwahrscheinlichkeit für jede Fahrspur der vom Kraftfahrzeug befahrenen Straße separat ermittelt werden, wobei zu der mittleren Geschwindigkeit einer Fahrspur die Geschwindigkeiten der auf der Fahrspur befindlichen Fahrzeuge beitragen.

3. Verfahren nach Anspruch 2,
**dadurch gekennzeichnet,**
**dass** ein Stau erkannt wird, wenn auf allen Fahrspuren die Stauwahrscheinlichkeit eine obere Grenzwahrscheinlichkeit erreicht oder überschreitet.

4. Verfahren nach Anspruch 2,
**dadurch gekennzeichnet,**
**dass** ein Stau erkannt wird, wenn auf allen zum Kraftfahrzeug benachbarten Fahrspuren die Stauwahrscheinlichkeit eine obere Grenzwahrscheinlichkeit erreicht oder überschreitet.

5. Verfahren nach Anspruch 2,
**dadurch gekennzeichnet,**
**dass** ein Stau erkannt wird, wenn auf der Fahrspur des Kraftfahrzeugs die Stauwahrscheinlichkeit eine obere Grenzwahrscheinlichkeit erreicht oder überschreitet.

6. Verfahren nach Anspruch einem der vorangehenden Ansprüche,
**dadurch gekennzeichnet,**
**dass** bei Ausfall eines Sensors, dessen Daten bei der Ermittlung der Stauwahrscheinlichkeit berücksichtigt werden, die Stauwahrscheinlichkeit schrittweise oder kontinuierlich verringert wird.

7. Verfahren nach Anspruch 6,
**dadurch gekennzeichnet,**
**dass** die Verringerung der Stauwahrscheinlichkeit unter Berücksichtigung der mittleren Geschwindigkeit und/oder der Geschwindigkeit des Kraftfahrzeugs vorgenommen wird.

8. Verfahren nach einem der Ansprüche 6 oder 7,
**dadurch gekennzeichnet,**
**dass** die Verringerung der Stauwahrscheinlichkeit unter Berücksichtigung des Abstands des Kraftfahrzeugs zu einem voranfahrenden Fahrzeug vorgenommen wird.

9. Kraftfahrzeug mit einem Stauassistenzsystem, umfassend wenigstens einen Sensor und eine Steuerungseinrichtung, wobei die Steuerungseinrichtung zur Durchführung des Verfahrens nach einem der Ansprüche 1 bis 8 ausgebildet ist.
